# EUROPEAN PATENT SPECIFICATION

(11) **EP 2 709 389 B1**
(45) Date of publication and mention of the grant of the patent: **08.06.2016**
(21) Application number: 12006555.2
(22) Date of filing: 18.09.2012
(51) Int. Cl.: H04W 8/04, H04W 48/18, H04W 60/00

(54) **A method for controlling the roaming of a mobile unit in mobile networks**
Verfahren zur Steuerung des Roamings einer mobilen Einheit in mobilen Netzwerken
Procédé permettant de commander l'itinérance d'une unité mobile dans des réseaux mobiles

(43) Date of publication of application: 19.03.2014
(73) Proprietor: Giesecke & Devrient GmbH, 81677 München (DE)
(72) Inventor: Wennberg, Martin, 167 55 Bromma (SE); Westin, Kristina, 132 36 Saltsjö-Boo (SE); Malmberg, Johan, 175 43 Järfälla (SE)

(56) References cited:
- EP-A1- 1 653 764
- EP-A2- 1 463 366
- US-A1- 2007 249 338
- "3rd Generation Partnership Project; Technical Specification Group Core Network and Terminals; Non-Access-Stratum (NAS) functions related to Mobile Station (MS) in idle mode (Release 11)", 3GPP STANDARD; 3GPP TS 23.122, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. CT WG1, no. V11.2.0, 25 June 2012 (2012-06-25), pages 1-44, XP050580796, [retrieved on 2012-06-25]

## Description

The invention refers to a method for controlling the roaming of a mobile unit in mobile networks as well as to a corresponding system.

Mobile subscribers associated with a mobile home network quite often wish to register in the home network via another, possibly foreign, mobile network, e.g. in case that the mobile subscriber is in a foreign country. To enable such a registration via a visited network, mobile network operators provide the mechanism of roaming which allows the mobile equipment used by the subscriber to attach to a visited network and perform registration in the home network via this visited network.

Mobile network operators usually wish to control the foreign networks which are allowed to be used as visited networks for roaming. E.g., a mobile network operator may prefer that subscribers use a certain foreign network due to better roaming agreements with the operator of this network compared with other foreign networks.

A known control mechanism for roaming is so-called SIM-based roaming steering where the SIM card of the subscriber includes a roaming list of preferred networks to be used as visited networks. As a consequence, the subscriber only tries to attach to those preferred networks when roaming. The roaming list is usually transmitted by a server over-the-air to the SIM card in the corresponding mobile equipment. Hence, a problem with this kind of roaming may arise in case that a transmitted list is not received by the SIM card or cannot be processed by the SIM card.

Documents EP 1463 366 B1 and EP 1527 653 B1 at least partly describe methods for roaming steering where a network element prevents the registration of a mobile unit in a home network in case that the visited network is a non-preferred network. A list of the preferred networks may be transmitted over-the-air to the mobile unit which stores the list in the SIM card.

In EP 1 653 764 a second registration attempt is accepted and a first request may be accepted or not. EP 1463 366 B1 is considered to form the closest prior art.

It is an object of the invention to provide a method for controlling the roaming of a mobile unit enabling a fast and flexible registration of the mobile unit in a home network via a foreign network.

This object is solved by the subject matter of the independent claims. Preferred embodiments of the invention are described in the dependent claims.

The method of the invention controls the roaming of a mobile unit (e.g. a mobile phone). The mobile unit is associated with a home network and may send a registration request for registering in the home network via a visited network. A control unit in response to a detected registration request performs the following steps. The control unit determines whether the mobile unit (1) has sent a preceding registration request for said visited network or for a roaming region of said visited network and depending thereon approves or disapproves said registration request. Furthermore, the control unit is arranged to determine whether the visited network is a preferred network or a non-preferred network. A subsequent registration request of a non-preferred visited network will be disapproved. However, a first registration request of a preferred visited network and of a non-preferred visited network will be approved. Furthermore, a list of preferred networks is sent to the mobile unit.

A roaming region comprises a plurality of (potentially visited) networks.

The control unit disapproves the registration request, if it is observed that the mobile unit has sent a preceding registration request for said visited network or for a roaming region of said visited network before the detected registration request and observed that the visited network is not a preferred network. However, the control unit approves the registration request for the home network, if it is observed that the mobile unit has not sent a preceding registration request for said visited network or said roaming region before the detected registration request and regardless of whether the visited network is a preferred network. Thereafter the control unit sends a list of preferred networks to the mobile unit. This list will be considered by the mobile unit in a further selection of a visited network.

In a preferred variant a detection unit detects a registration request for registering in the home network sent by the mobile unit via a visited network. The detection unit may (initially) retain the registration request and handle same in accordance with an approval or disapproval from the control (or preference) unit. The control unit may alternatively be considered to comprise the detection unit and the (roaming control or) preference unit.

The preference unit observes that the mobile unit has sent a preceding registration request before the detected registration request via a visited network and that the visited network is not a preferred network and informs the detection unit about the disapproval of said request. The registration request is thus rejected by the detection unit, preferably by transmitting a rejection message from the detection unit to the mobile unit. In other words, the preference unit checks whether the mobile unit has sent a preceding registration request and, if so, whether the visited network is included in a list of preferred networks or not.

Depending on the circumstances, a predetermined number of preceding registration requests may be taken into account when checking whether a preceding registration request has been sent before via a visited network. In a preferred embodiment, only the immediately preceding registration request is checked. I.e., the preference unit observes whether the mobile unit has sent the immediately preceding registration request via the visited network or its region. For this purpose the preference unit is provided with the information of a detected registration request and stores at least the last registration request for the mobile unit. Preferably, the detection unit informs the preference unit about such a detected registration request.

If the preference unit observes that the mobile unit has not sent a preceding registration request before the detected registration request via a foreign network and regardless of whether the visited network is a preferred network or not, the detection unit forwards the registration request to the home network, resulting in a registration of a mobile unit in the home network. Thereafter, the list of preferred foreign networks is sent from the preference unit to the mobile unit so that the mobile unit can choose a preferred network from the list as a visited network during the next attempt to register in the home network.

The method of the invention provides a roaming with a low time delay even in case that no information is available on the mobile unit about preferred networks for roaming. This is achieved by the feature that an attempt for registering in a home network via a visited network is always allowed in case that the attempt is the first attempt for registering. Furthermore, a list of preferred foreign networks is sent to the mobile unit after the first registration via the visited network so that for later attempts only preferred networks are used. In case that the list of preferred foreign networks does not reach the mobile unit for whatever reasons or cannot be processed by the mobile unit, the invention provides a mechanism to prevent the use of non-preferred networks by rejecting registration requests via those non-preferred networks if the registration request is a re-attempt to register in the home network.

The mobile unit might be attached to a non-preferred network. In order to ensure that the mobile unit attached to a non-preferred network will change to a preferred network, the mobile unit re-attempts to register to the home network via a visited network out of the list after a predetermined time interval.

In another preferred embodiment, a list of preferred networks used by the preference unit is determined by this unit based e.g. on the location of the mobile unit and particularly based on a roaming region in which the mobile unit is located. A roaming region may e.g. refer to a particular country, a group of countries but also to location-independent different networks. The list for a roaming region includes certain preferred networks, preferably selected by the network operator of the home network.

In a preferred embodiment, a plurality of lists of preferred foreign networks is stored in the preference unit where the preference unit determines the list of preferred foreign networks by selecting a list out of the plurality of lists. Preferably, lists for several roaming regions exist, so that the preference unit selects the list of the roaming region in which the mobile unit is located.

In a further variant, the preference unit observes whether a preceding registration request has been sent via such a visited network which is in the same roaming region as the visited network.

In a preferred variant, the preference unit concludes that the mobile unit has sent or has not sent a preceding registration request before the detected registration request via a visited network in case that the preference unit has sent or has not sent the list of preferred foreign networks (immediately) before. Hence, the determination whether a preceding registration request has been sent by the mobile unit before is based on the observation whether the list of preferred networks has already been transmitted by the preference unit.

In an embodiment, if the preference unit observes that the mobile unit has sent a preceding registration request via a foreign network and that the visited network is included in the list of preferred networks, the detection unit forwards the registration request to the home network resulting in a registration of the mobile unit in the home network. In this case, the list of preferred foreign networks is preferably not sent from the preference unit to the mobile unit. This is because this list has already been transferred to the mobile unit at the first attempt to register in the home network via a visited network.

In another variant, after a maximum number of rejections, the detection unit forwards the registration request to the home network, resulting in a registration of the mobile unit in the home network. Furthermore, the list of preferred networks may be sent once again from the preference unit to the mobile unit. This embodiment ensures that a subscriber eventually gets a connection to the home network even in case that the subscriber does not receive or cannot process a list of preferred networks.

The mobile equipment is preferably assigned to a subscriber via a subscriber identity module storing the subscriber identity and being connected to the mobile equipment. The term "subscriber identity module" may refer to any module or data carrier storing a subscriber identity which is fixedly arranged in the mobile equipment or reversibly arranged therein. Preferably, the subscriber identity module refers to a USIM/SIM card. Preferably, if the list of preferred networks is received by the mobile unit, this list is stored in the subscriber identity module.

The detection unit and the preference unit used in the method of the invention can be separate units at different physical locations. Preferably, the preference unit is a server providing so-called OTA updates (OTA = Over-the-Air) to mobile units and particularly subscriber identity modules. However, it is also possible that the method of the invention is performed by a server comprising both the detection unit and the preference unit. In this case, the detection unit and the preference unit are located at the same physical location.

The control unit or its parts (detection unit and preference unit) are arranged between the visited network and the home network or within the home network between the visited network and the HLR of the home network.

Besides the above method, the invention also refers to a corresponding system for controlling the roaming of a mobile unit. The system comprises a detection unit and a preference unit which are adapted to perform the above described method of the invention or one or more preferred embodiments of the above described method of the invention.

Embodiments of the invention will now be described with respect to the accompanying drawings wherein:
- Fig. 1 to Fig. 3: are schematic illustrations showing the steps performed in a preferred embodiment of the method according to the invention; and
- Fig. 4: is a flow diagram illustrating steps performed by the preference unit in the embodiment of the invention shown in Figs. 1 to 3.

The method as described in the following refers to an enhanced dynamic roaming steering enabling a mobile unit to register in a home network via preferred visited networks.

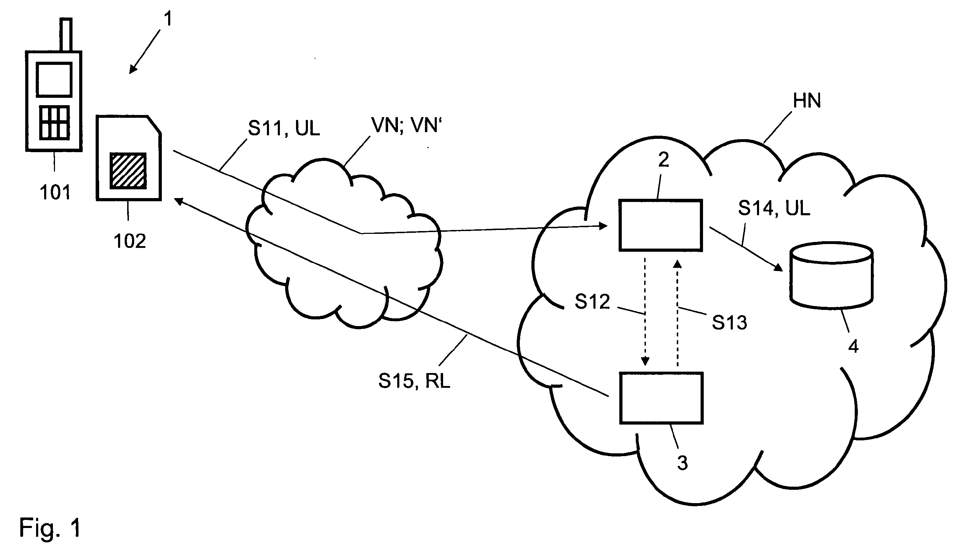

In Fig. 1, the mobile unit 1 comprises the handset or mobile equipment 101 in which a SIM/USIM card 102 is inserted. This card 102 stores the identity of a mobile subscriber which is assigned to a corresponding home network HN. Due to the inserted USIM/SIM card, the mobile unit as a whole is assigned to the home network HN. Fig. 1 further shows a visited network VN, VN' and a control unit 2, 3 comprising a preference unit 3 and a detection unit 2. The control unit generally may be arranged within the home network HN - as illustrated in figure 1 - or between the visited network VN and the home network HN. Finally, the home network HN comprises means 4, typically an HLR, which is adapted to receive and answer registration requests (S11, S14) from visited networks for the home network HN.

In the scenario shown in Fig. 1, the mobile unit 1 is turned on by the user at a location where the home network HN is not available. As a consequence, the mobile unit has to register in its home network HN via an available visited network VN, VN'. The mobile unit 1 usually chooses as a visited network a (foreign) network VN, VN' out of a roaming list of preferred mobile networks stored in the card 102 in order to connect to the home network HN. For different reasons, e.g. when the card 102 does not store the correct list for this roaming region, the mobile unit (1) may try to register either from a preferred visited network VN or from a non-preferred visited network VN'.

In order to register at the home network HN via the visited network VN, the mobile unit sends in a first step S11 a registration request in the form of an Update Location signal or message UL via the visited network VN. This Update Location signal is detected by a probe (or detection unit) 2. The probe 2 initially retains the Update Location signal UL and informs in step S12 a roaming logic (or preference unit) 3 about the detection of an Update Location signal. In the embodiment of Fig. 1, the roaming logic 3 is a separate server which can send so-called OTA updates (OTA = Over-the-Air) to the SIM card 102 in order to transmit updated roaming lists (of preferred foreign networks) to the SIM card. After having received the information that an Update Location signal has been detected, the roaming logic 3 checks whether the Location Update signal UL refers to the first attempt of the mobile unit 1 to register via the network VN in the home network HN. In the situation of Fig. 1, the roaming logic 3 concludes that the signal UL refers to the first attempt of the mobile unit 1.

As a consequence of the conclusion that the mobile unit 1 attempts to register in the home network HN via said network at the first time, the roaming logic 3 instructs the probe 2 in step S13 to forward the Location Update signal UL to the home location register 4 in the home network HN so that the mobile unit 1 is registered in the home network HN. The Location Update signal is forwarded in step S14 of Fig. 1 to the home location register 4. The commonly known further steps of the HLR 4 acknowledging the request are not shown.

Step S13 is performed regardless of whether the visited network VN is a preferred network for roaming according to the corresponding roaming conditions or not. Hence, even in case that the visited network is a non-preferred network VN', it is ensured that a registration of the mobile unit 1 is possible at the first registration attempt enabling a connection to the home network HN with a short time delay. Contrary to that, in prior art methods which use a probe for detecting registration requests, all registration requests performed via non-preferred visited networks are rejected until a registration request comes from a preferred network.

After having performed step S13, the roaming logic 3 sends in step S15 the appropriate roaming list RL for the location, e.g. country, in which the subscriber roams to the SIM card 102 over-the-air. The roaming list RL which corresponds to an OTA update is thereafter stored in the SIM card 102, and the mobile equipment 101 is notified about the updated roaming list by issuing a refresh command to the mobile equipment. In any re-attempt to register in the home network via a visited network, the mobile unit 1 will try to choose a network out of the roaming list as the visited network.

In the scenario of Fig. 1, the visited network may be a non-preferred network VN' not included in the roaming list RL. Hence, the mobile unit 1 is registered via a non-preferred network in the home network HN. The mobile unit will try to attach to a preferred network out of the list instead of the currently used network VN within a specified time interval, e.g. 6 minutes. The cyclic network search interval is preferably stored in a (HPPLMN) file on the SIM card 102. This ensures that the mobile unit will only temporarily use a non-preferred network for roaming and switch after a certain time to a preferred network.

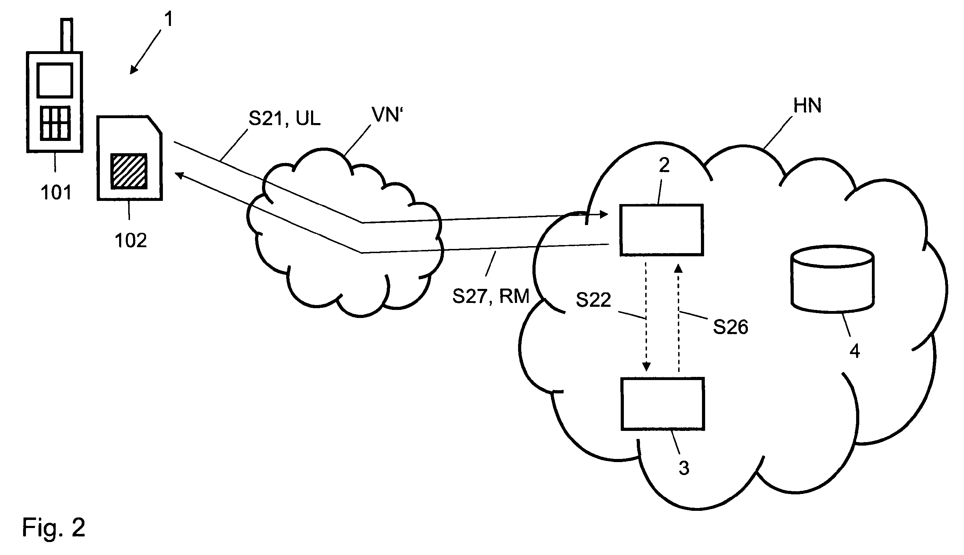

In some cases it may happen that the mobile unit 1 is not informed about the roaming list of preferred networks. E.g., the transmission in step S15 has failed or limitations in the mobile equipment 101 or in the USIM/SIM card 102 or in the preference unit 3 did not allow to provide the roaming list in the USIM/SIM card 102. Furthermore, it may happen that the user of the handset 101 has made a manual network selection by choosing a non-preferred network different from the networks included in the roaming list RL. Moreover, the visited network VN may not allow messages (e.g. 8 bit short messages) for updating roaming lists. Fig. 2 refers to such a situation in which the roaming list RL transmitted in step S15 of Fig. 1 did not avoid that the mobile unit tries to register via a non-preferred network VN'.

In Fig. 2, it is assumed that the mobile unit 1 subsequently selects a non-preferred network VN'. In particular the mobile unit 1 now tries to register via the same non-preferred visited network VN' again.

A new Update Location signal UL is sent in step S21 via the visited network VN' to the home network HN. Analogously to Fig. 1, the sent 21 Update Location signal UL is detected and initially retained by the probe 2. Furthermore, the roaming logic 3 is informed in step S22 about the detection of the Update Location signal. The roaming logic 3 once again checks whether the attempt to register at the home network HN via a visited network is the first attempt of the mobile unit 1 for said network VN'. In particular the roaming logic 3 determines whether the preceding attempt was from the same network VN'.

Contrary to Fig. 1, the roaming logic 3 now comes to the conclusion that the attempt of the mobile unit 1 is not the first attempt from visited network VN'. Since moreover the visited network VN' is a non-preferred network, the roaming logic 3 instructs the probe 2 in step S26 to prevent the registration of the mobile unit in the home network HN.

The probe 2 may discard the retained Update Location signal and/ or send a rejection message RM in step S27 to the mobile unit 1. Such different approaches for registration prevention by means of the probe are known from the prior art. The rejection message RM explicitly informs the mobile unit 1 that the current visited network VN' is not approved for the roaming.

In case that the visited network VN' is a non-preferred network once again, the above steps S22, S26 and S27 are repeated resulting in a further rejection of the registration. Subsequent repetitions of steps S22, S26 and S27 are allowed for a defined maximum number of tries in order to avoid that the subscriber does not get a mobile connection at all. I.e., in case that the maximum number of tries is achieved, the registration in the home network via a visited network is allowed even if the visited network is a non-preferred network.

In the above embodiments it has been checked whether the registration request is from the same visited network VN' as the preceding registration request. However, it could as well be checked whether the registration request is from a visited network of the same roaming region. The roaming region comprises at least two networks. The region may be a country, a set of countries, a location and/ or a group of networks of the same or different network providers. A roaming list accordingly may be considered to be valid for a roaming region. In this embodiment a subsequent request from the same roaming region via a non-preferred visited network will be rejected regardless of the visited network.

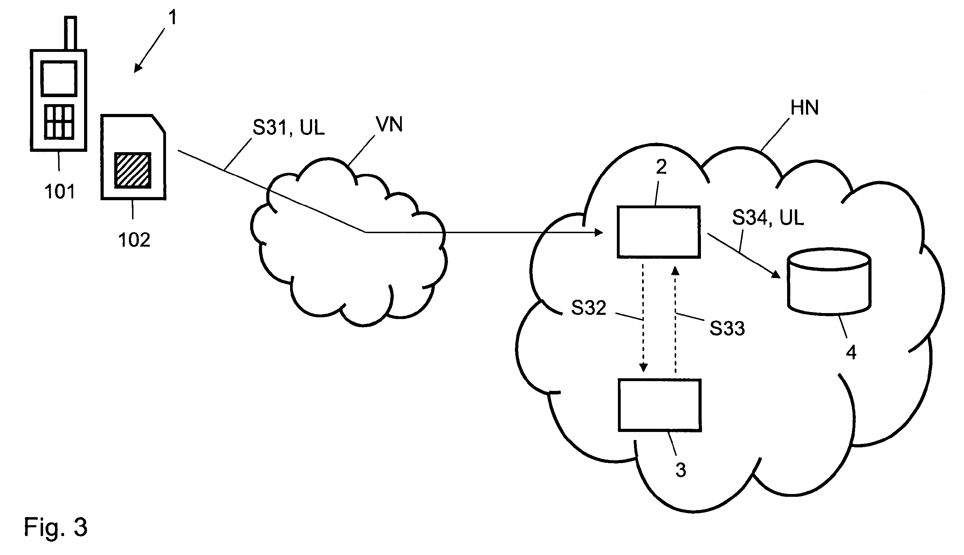

Fig. 3 shows another scenario where the mobile unit 1 e.g. has moved into a new location area and tries to register in the home network HN via an available visited network VN. Contrary to Fig. 2, the visited network VN is now a preferred network, which thus should be included in the roaming list RL.

The mobile unit 1 once again sends in step S31 an Update Location signal via the network VN to the home network HN. This signal is detected by the probe 2 informing the roaming logic 3 about the detection of this signal in step S32. The roaming logic 3 determines that the network VN is a preferred network, i.e. included in the currently valid roaming list RL. As a consequence, the roaming logic 3 instructs the probe 2 in step S33 to forward the Update Location signal to the home location register 4. This forwarding is performed in step S34 and has the result that the mobile unit is registered in the home network HN via the visited network VN. The preferred visited network VN may be the same as in figure 1 or another preferred network.

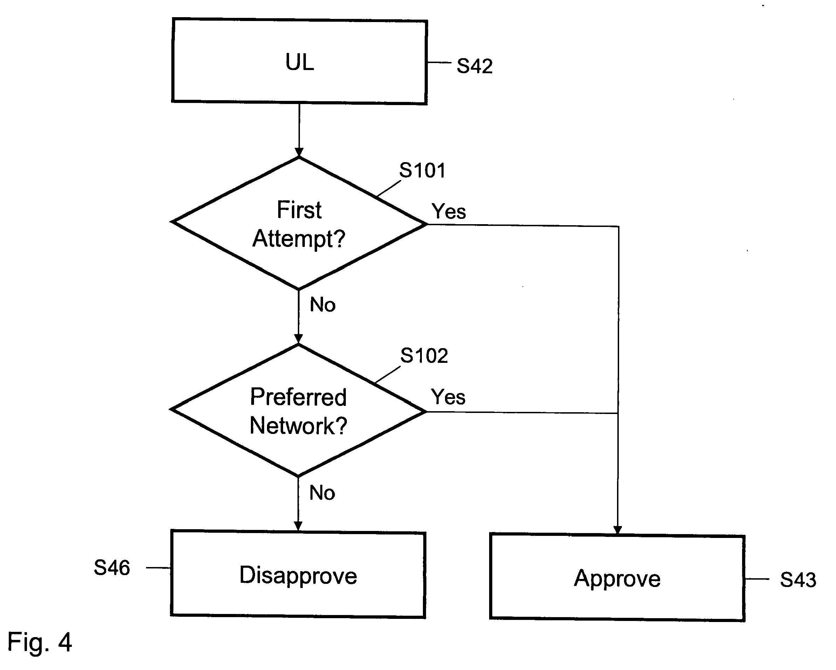

Fig. 4 illustrates in detail the steps performed by the roaming logic 3 in the above described embodiments.

In step S42, the roaming logic 3 receives the information that an Update Location signal UL has been detected. In step S101, the roaming logic 3 determines whether the attempt of the mobile unit to register via a visited network is the first attempt. In particular the roaming logic 3 in step S101 determines whether the current attempt is from the same visited network or from the same roaming region for which the preceding request of this mobile unit 1 has been handled.

If this is the case (branch "Yes" out of S101), the roaming logic approves in step S43 the visited network regardless of whether or not the network is a preferred network out of the corresponding roaming list RL. For this purpose the roaming logic informs the detection unit 2 as shown by messages S13 or S33 in Fig. 1 and 3 respectively. As a consequence, the mobile unit 1 registers via the visited network in the home network HN.

In case that the attempt of the mobile unit is not the first attempt (branch "No" out of S101), the roaming logic 3 checks in step S102 whether the visited network is a preferred network. If this is the case (branch "Yes" out of S102), the visited network is approved in step 43 so that the roaming logic 3 instructs the probe 2 to forward the Update Location signal UL to the home location register 4.

If the visited network is not a preferred network (branch "No" out of S102), the registration is disapproved in step S46 with the consequence that the probe 2 is instructed (S26 in Fig. 2) not to forward the Location Update signal UL to the home location register 4. Furthermore the probe may e.g. directly reject the request.

The invention as described in the forgoing has several advantages. Particularly, the roaming steering of the invention can cover subscribers which cannot manage conventional roaming steering via updated roaming lists. Moreover, the roaming steering provides a fast registration of a mobile unit in a home network via a foreign network. This is because a first attempt to register in a home network via a visited network is allowed at all times regardless of whether the visited network is a preferred foreign network or not.

## Claims

1. A method for controlling the roaming of a mobile unit (1) in mobile networks, the mobile unit (1) being associated with a home network (HN), wherein - in response to a detected registration request (UL) for registering in the home network (HN) sent by the mobile unit (1) via a visited network (VN) - a control unit (2,3) performs the following steps:
a) if it is observed (S101) that the mobile unit (1) has sent a preceding registration request for said visited network (VN) or a roaming region (VN, VN') of said visited network before the detected registration request (UL) and observed (S102) that the visited network (VN) is not a preferred network, disapproving (S46) the registration request (UL),
b) if it is observed (S101) that the mobile unit (1) has not sent a preceding registration request for said visited network (VN) or said roaming region (VN, VN') before the detected registration request (UL) and regardless of whether the visited network (VN) is a preferred network,
approving (S43) the registration request (UL) for the home network (HN), resulting in a registration of the mobile unit (1) in the home network (HN), whereupon a list of preferred networks (RL) is sent to the mobile unit (1) for choosing a preferred network from the list (RL) as a visited network (VN) during the next attempt to register in the home network (HN).

2. The method according to claim 1, **characterized in that** in steps a) and b) it is observed whether the mobile unit (1) has sent the preceding registration request via said visited network (VN) or said roaming region (VN, VN').

3. The method according to claim 1 or 2, **characterized in that**, the mobile unit (1) re-attempts to register to the home network (HN) via a network out of the list (RL) after a predetermined time interval.

4. The method according to one of the preceding claims, **characterized in that** the list (RL) of preferred networks is determined based on the location of the mobile unit (1) and particularly based on a roaming region in which the mobile unit (1) is located.

5. The method according to one of the preceding claims, **characterized in that** a plurality of lists of preferred networks is stored and the list (RL) of preferred networks to be sent is selected out of said plurality of lists.

6. The method according to one of the preceding claims, **characterized in that** in steps a) and b) it is observed whether the mobile unit (3) has sent a preceding registration request before the detected registration request (UL) via a network which is in the same roaming region as the visited network (VN).

7. The method according to one of the preceding claims, **characterized in that** in steps a) and b) it is concluded that the mobile unit (1) has sent or has not sent a preceding registration request before the detected registration request (UL) via a network in case that the control unit (3) has sent or has not sent the list (RL) of preferred networks at an earlier point in time.

8. The method according to one of the preceding claims, **characterized in that**, if it is observed that the mobile unit (1) has sent a preceding registration request before the detected registration request (UL) via the visited network (VN) and that the visited network (VN) is included in the list of preferred networks, the registration request (UL) is forwarded in the home network (HN), resulting in a registration of the mobile unit (1) in the home network (HN).

9. The method according to one of the preceding claims, **characterized in that**, after a maximum number of subsequent repetitions of step a), the detection unit (2) forwards the registration request (UL) to the home network (HN), resulting in a registration of the mobile unit (1) in the home network (HN), whereupon preferably the list of preferred networks is sent from a preference unit (3) to the mobile unit (1).

10. The method according to one of the preceding claims, **characterized in that** the mobile unit (1) is assigned to a subscriber via a subscriber identity module (102) storing the subscriber identity and being connected to the mobile equipment (101).

11. The method according to claim 10, **characterized in that**, if the list (RL) of preferred networks is received in step b) by the mobile unit (1), the list (RL) is stored in the subscriber identity module (102).

12. A system for controlling the roaming of a mobile unit (1) in mobile networks, the mobile unit (1) being associated with a home network (HN), wherein the system further comprises a control unit (3) which is adapted to - in response to a detected registration request (UL) for registering in the home network (HN) sent by the mobile unit (1) via a visited network (VN) - approve or disapprove the detected registration request (UL) according to the following :
a) if it is observed (S101) that the mobile unit (1) has sent a preceding registration request for said visited network (VN) or a roaming region (VN, VN') of said visited network before the detected registration request (UL) and observed (S102) that the visited network (VN) is not a preferred network, disapproving (S46) the registration request (UL),
b) if it is observed (S101) that the mobile unit (1) has not sent a preceding registration request for said visited network (VN) or said roaming region (VN, VN') before the detected registration request (UL) and regardless of whether the visited network (VN) is a preferred network, approving (S43) the registration request (UL) in the home network (HN), resulting in a registration of the mobile unit (1) in the home network (HN), whereupon a list of preferred networks (RL) is sent to the mobile unit (1) for choosing a preferred network from the list (RL) as a visited network (VN) during the next attempt to register in the home network (HN).

13. The system according to claim 12, **characterized in that** the control unit (2, 3) comprises a detection unit (2) and a preference unit (3), wherein the detection unit (2) is adapted to detect the registration request (UL) and to inform the preference unit (3) about the detected registration request.

14. The system according to claim 13, **characterized in that** the detection unit (2) or the preference unit (3) is adapted to determine whether the mobile unit (1) has sent a preceding registration request for said visited network (VN) or said roaming region (VN, VN') and the preference unit (3) is adapted to determine whether the visited network is a preferred network and to inform the detection unit (2) about approval (S13, S33) or disapproval (S26) of the detected registration request (UL).

15. The system according to claim 13 or 14, **characterized in that** the detection unit (2) is adapted to retain the detected registration request (UL) and to forward the detected registration request to the home network (HN) or to an HLR (4) of the home network (HN) after the corresponding approval (S13, S33) or disapproval (S26) from the preference unit (3).

16. The system according to claim 12 to 15, **characterized in that** the system is adapted to perform a method according to one of claims 2 to 11.

## Patentansprüche

1. Verfahren zum Kontrollieren eines Rufbereichswechsels einer Mobileinheit (1) in Mobilfunknetzwerken, wobei die Mobileinheit (1) mit einem Heimnetzwerk (HN) assoziiert ist, wobei - als Antwort auf eine detektierte Registrierungsanfrage (UL) zum Registrieren in dem Heimnetzwerk (HN), welche durch die Mobileinheit (1) über das besuchte Netzwerk (VN) gesendet wurde - eine Kontrolleinheit (2, 3) die folgenden Schritte ausführt:
a) falls beobachtet wird (S101), dass die Mobileinheit (1) eine vorhergehende Registrierungsanfrage für das besuchte Netzwerk (VN) oder für die Rufbereichswechselregion (VN, VN') des gesuchten Netzwerks vor der detektierten Registrierungsanfrage (UL) gesendet hat und beobachtet wird (S102), dass das besuchte Netzwerk (VN) nicht das präferierte Netzwerk ist, Ablehnen (S46) der Registrierungsanfrage (UL),
b) falls beobachtet wird (S101), dass die Mobileinheit (1) keine vorhergehende Registrierungsanfrage für das besuchte Netzwerk (VN) oder für die Rufbereichswechselregion (VN, VN') vor der detektierten Registrierungsanfrage (UL) gesende hat und unabhängig davon, ob das besuchte Netzwerk (VN) ein präferiertes Netzwerk ist,
Annehmen (S43) der Registrierungsanfrage (UL) für das Heimnetzwerk (HN), resultierend in einer Registrierung der Mobileinheit (1) in dem Heimnetzwerk (HN), worauf eine Liste von präferierten Netzwerken (RL) an die Mobileinheit (1) zum Auswählen eines präferierten Netzwerks aus der Liste (RL) als ein besuchtes Netzwerk (VN) während des nächsten Versuchs eines Registrierens in dem Heimnetzwerk (HN) gesendet werden.

2. Verfahren gemäß Anspruch 1, **dadurch gekennzeichnet, dass** in den Schritten a) und b) beobachtet wird, ob die Mobileinheit (1) die vorhergehende Registrierungsanfrage über das besuchte Netzwerk (VN) oder die Rufbereichswechselregion (VN, VN') gesendet hat.

3. Verfahren gemäß Anspruch 1 oder 2, **dadurch gekennzeichnet, dass** die Mobileinheit (1) erneut versucht, sich am Heimnetzwerk (HN) mittels eines Netzwerks aus der Liste (RL) nach einem vorbestimmten Zeitintervall zu registrieren.

4. Verfahren nach einem der vorhergehenden Ansprüche, **dadurch gekennzeichnet, dass** die Liste (RL) von präferierten Netzwerken basierend auf dem Standort der Mobileinheit (1) und insbesondere basierend auf einer Rufbereichswechselregion in dem sich die Mobileinheit (1) befindet, bestimmt wird.

5. Verfahren nach einem der vorhergehenden Ansprüche, **dadurch gekennzeichnet, dass** die Mehrzahl von Listen von präferierten Netzwerken gespeichert ist und die Liste (RL) von präferierten Netzwerken zur Verwendung aus einer Mehrzahl von Listen ausgewählt wird.

6. Verfahren nach einem der vorherigen Ansprüche, **dadurch gekennzeichnet, dass** in den Schritten a) und b) beobachtet wird, ob die Mobileinheit (1) eine vorhergehende Registrierungsanfrage vor der detektierten Registrierungsanfrage (UL) über das Netzwerk, welches in derselben Rufbereichswechselregion wie das besuchte Netzwerk (VN) liegt, gesendet wurde.

7. Verfahren nach einem der vorhergehenden Ansprüche, **gekennzeichnet dadurch, dass** in den Schritten a) und b) festgestellt wird, dass die Mobileinheit (1) eine vorhergehende Registrierungsanfrage vor der detektierten Registrierungsanfrage (UL) über das Netzwerk gesendet hat, für den Fall, dass die Kontrolleinheit (3) die Liste (RL) von präferierten Netzwerken zu einem früheren Zeitpunkt gesendet oder nicht gesendet hat.

8. Verfahren nach einem der vorhergehenden Ansprüche, **dadurch gekennzeichnet, dass** falls es beobachtet wird, dass die Mobileinheit (1) eine vorhergehende Registrierungsanfrage mittels des besuchten Netzwerks (VN) vor der detektierten Registrierungsanfrage (UL) gesendet hat, und, dass das besuchte Netzwerk (VN) in der Liste von präferierten Netzwerken enthalten ist, Weiterleiten der Registrierungsanfrage (UL) in dem Heimnetzwerk (HN), resultierend in einer Registrierung der Mobileinheit (1) in dem Heimnetzwerk (HN).

9. Verfahren nach einem der vorhergehenden Ansprüche, **dadurch gekennzeichnet, dass** nach einer maximalen Anzahl von aufeinanderfolgenden Wiederholungen des Schritts a) die Detektionseinheit (2) die Registrierungsanfrage (UL) an das Heimnetzwerk (HN) weiterleitet, resultierend in einer Registrierung der Mobileinheit (1) in dem Heimnetzwerk (HN), worauf bevorzugt die Liste von bevorzugten Netzen von einer Präferenzeinheit (3) an die Mobileinheit (1) gesendet wird.

10. Verfahren nach einem der vorhergehenden Ansprüche, **dadurch gekennzeichnet, dass** die Mobileinheit (1) einem Teilnehmer mittels einem Teilnehmeridentitätsmodul (102), welches die Teilnehmeridentität speichert und mit dem Mobilgerät (101) verbunden ist, zugeordnet wird.

11. Verfahren nach Anspruch 10, **dadurch gekennzeichnet, dass**, falls die Liste (RL) von präferierten Netzwerken in dem Schritt b) durch die Mobileinheit (1) empfangen wird, die Liste (RL) in dem Teilnehmeridentitätsmodul (102) gespeichert ist.

12. System zum Kontrollieren eines Rufbereichswechsels einer Mobileinheit (1) in Mobilnetzwerken, wobei die Mobileinheit (1) mit einem Heimnetzwerk (HN) assoziiert ist, wobei das System ferner eine Kontrolleinheit (3) aufweist, die eingerichtet ist zum wobei - als Antwort auf eine detektierte Registrierungsanfrage (UL) zum Registrieren in dem Heimnetzwerk (HN), welche durch die Mobileinheit (1) über das besuchte Netzwerk (VN) gesendet wurde - Annehmen oder Ablehnen der detektierten Registrierungsanfrage (UL) gemäß dem folgenden:
a) falls beobachtet wird (S101), dass die Mobileinheit (1) eine vorhergehende Registrierungsanfrage für das besuchte Netzwerk (VN) oder für die Rufbereichswechselregion (VN, VN') des gesuchten Netzwerks vor der detektierten Registrierungsanfrage (UL) gesendet hat und beobachtet wird (S102), dass das besuchte Netzwerk (VN) nicht das präferierte Netzwerk ist, Ablehnen (S46) der Registrierungsanfrage (UL),
b) falls beobachtet wird (S101), dass die Mobileinheit (1) keine vorhergehende Registrierungsanfrage für das besuchte Netzwerk (VN) oder für die Rufbereichswechselregion (VN, VN') vor der detektierten Registrierungsanfrage (UL) gesende hat und unabhängig davon, ob das besuchte Netzwerk (VN) ein präferiertes Netzwerk ist,
Annehmen (S43) der Registrierungsanfrage (UL) für das Heimnetzwerk (HN), resultierend in einer Registrierung der Mobileinheit (1) in dem Heimnetzwerk (HN), worauf eine Liste von präferierten Netzwerken (RL) an die Mobileinheit (1) zum Auswählen eines präferierten Netzwerks aus der Liste (RL) als ein besuchtes Netzwerk (VN) während des nächsten Versuchs eines Registrierens in dem Heimnetzwerk (HN) gesendet werden.

13. System gemäß Anspruch 12, **dadurch gekennzeichnet, dass** die Kontrolleinheit (2, 3) eine Detektionseinheit (2) und eine Präferenzeinheit (3) aufweist, wobei die Detektionseinheit (2) eingerichtet ist zum Detektieren der Registrierungsanfrage (UL) und zum Informieren der Präferenzeinheit (3) über die detektierte Registrierungsanfrage.

14. System gemäß Anspruch 13, **dadurch gekennzeichnet, dass** die Detektionseinheit (2) oder die Präferenzeinheit (3) eingerichtet ist zum Bestimmen, ob die Mobileinheit (1) eine vorhergehende Registrierungsanfrage für das besuchte Netzwerk (VN) oder die Rufbereichswechselregion (VN, VN') gesendet hat und die Präferenzeinheit (3) eingerichtet ist zum Bestimmen, ob das besuchte Netzwerk ein präferiertes Netzwerk ist und zum Informieren der Detektionseinheit (2) über die Annahme (S13, S33) oder Ablehnung (S26) der detektierten Registrierungsanfrage (UL).

15. System gemäß Anspruch 13 oder 14, **dadurch gekennzeichnet, dass** die Detektionseinheit (2) zum Zurückhalten der detektierten Registrierungsanfrage (UL) und zum Weiterleiten der detektierten Registrierungsanfrage zum Heimnetzwerk (HN) oder an eine HLR (4) des Heimnetzwerks (HN) nach entsprechender Annahme (S13, S33) oder Ablehnung (S26) von der Präferenzeinheit (3) eingerichtet ist.

16. System gemäß einem der Ansprüche 12 bis 15, **dadurch gekennzeichnet, dass** das System eingerichtet ist zum Ausführen eines Verfahrens gemäß einem der Ansprüche 2 bis 11.

## Revendications

1. Procédé destiné à commander l'itinérance d'une unité mobile (1) dans des réseaux mobiles, l'unité mobile (1) étant associée à un réseau domestique (HN), dans lequel en réaction à une demande d'inscription détectée (UL) pour inscription dans le réseau domestique (HN) envoyée par l'unité mobile (1) via un réseau visité (VN), une unité de commande (2, 3) exécute les étapes suivantes :
a) s'il est observé (S101) que l'unité mobile (1) a envoyé une demande d'inscription précédente pour ledit réseau visité (VN) ou une région d'itinérance (VN, VN') dudit réseau visité avant la demande d'inscription détectée (UL) et qu'il est observé (S102) que le réseau visité (VN) n'est pas un réseau préféré, elle désapprouve (S46) la demande d'inscription (UL) ;
b) s'il est observé (S101) que l'unité mobile (1) n'a pas envoyé de demande d'inscription précédente pour ledit réseau visité (VN) ou ladite région d'itinérance (VN, VN') avant la demande d'inscription détectée (UL) et indépendamment de si le réseau visité (VN) est un réseau préféré, elle approuve (S43) la demande d'inscription (UL) pour le réseau domestique (HN), résultant en une inscription de l'unité mobile (1) dans le réseau domestique (HN), suite à quoi une liste de réseaux préférés (RL) est envoyée à l'unité mobile (1) pour choisir un réseau préféré dans la liste (RL) comme réseau visité (VN) durant la prochaine tentative d'inscription dans le réseau domestique (HN).

2. Procédé selon la revendication 1, **caractérisé en ce que** lors des étapes a) et b), il est observé si l'unité mobile (1) a envoyé la demande d'inscription précédente via ledit réseau visité (VN) ou ladite région d'itinérance (VN, VN').

3. Procédé selon la revendication 1 ou 2, **caractérisé en ce que** l'unité mobile (1) tente à nouveau de s'inscrire sur le réseau domestique (HN) via un réseau provenant de la liste (RL) après un intervalle de temps prédéterminé.

4. Procédé selon l'une quelconque des revendications précédentes, **caractérisé en ce que** la liste (RL) de réseaux préférés est déterminée sur la base de la localisation de l'unité mobile (1) et en particulier sur la base d'une région d'itinérance dans laquelle se trouve l'unité mobile (1).

5. Procédé selon l'une quelconque des revendications précédentes, **caractérisé en ce qu'**une pluralité de listes de réseaux préférés est stockée, et la liste (RL) de réseaux préférés à envoyer est sélectionnée parmi ladite pluralité de listes.

6. Procédé selon l'une quelconque des revendications précédentes, **caractérisé en ce que** lors des étapes a) et b), il est observé si l'unité mobile (3) a envoyé une demande d'inscription précédente avant la demande d'inscription détectée (UL) via un réseau qui est dans la même région d'itinérance que le réseau visité (VN).

7. Procédé selon l'une quelconque des revendications précédentes, **caractérisé en ce que** lors des étapes a) et b), il est conclu que l'unité mobile (1) a envoyé ou n'a pas envoyé de demande d'inscription précédente avant la demande d'inscription détectée (UL) via un réseau au cas où l'unité de commande (3) a envoyé ou n'a pas envoyé la liste (RL) de réseaux préférés à un point antérieur dans le temps.

8. Procédé selon l'une quelconque des revendications précédentes, **caractérisé en ce que**, s'il est observé que l'unité mobile (1) a envoyé une demande d'inscription précédente avant la demande d'inscription détectée (UL) via le réseau visité (VN) et que le réseau visité (VN) est inclus dans la liste de réseaux préférés, la demande d'inscription (UL) est transférée dans le réseau domestique (HN), avec pour résultat une inscription de l'unité mobile (1) dans le réseau domestique (HN).

9. Procédé selon l'une quelconque des revendications précédentes, **caractérisé en ce que**, après un nombre maximal de répétitions subséquentes de l'étape a), l'unité de détection (2) transfère l'unité d'inscription (UL) vers le réseau domestique (HN), avec pour résultat une inscription de l'unité mobile (1) dans le réseau domestique (HN), suite à quoi, de préférence, la liste de réseaux préférés est envoyée d'une unité de préférence (3) à l'unité mobile (1).

10. Procédé selon l'une quelconque des revendications précédentes, **caractérisé en ce que** l'unité mobile (1) est attribuée à un abonné via un module d'identité d'abonné (102) stockant l'identité d'abonné et étant connecté à l'équipement mobile (101).

11. Procédé selon la revendication 10, **caractérisé en ce que**, si la liste (RL) de réseaux préférés est reçue à l'étape b) par l'unité mobile (1), la liste (RL) est stockée dans le module d'identité d'abonné (102).

12. Système destiné à commander l'itinérance d'une unité mobile (1) dans des réseaux mobiles, l'unité mobile (1) étant associée à un réseau domestique (HN), dans lequel le système comprend en outre une unité de commande (3) qui est apte à, en réaction à une demande d'inscription détectée (UL) pour inscription dans le réseau domestique (HN) envoyée par l'unité mobile (1) via un réseau visité (VN), à approuver ou désapprouver la demande d'inscription détectée (UL) conformément à ce qui suit :
a) s'il est observé (S101) que l'unité mobile (1) a envoyé une demande d'inscription précédente pour ledit réseau visité (VN) ou une région d'itinérance (VN, VN') dudit réseau visité avant la demande d'inscription détectée (UL) et qu'il est observé (S102) que le réseau visité (VN) n'est pas un réseau préféré, elle désapprouve (S46) la demande d'inscription (UL) ;
b) s'il est observé (S101) que l'unité mobile (1) n'a pas envoyé de demande d'inscription précédente pour ledit réseau visité (VN) ou ladite région d'itinérance (VN, VN') avant la demande d'inscription détectée (UL) et indépendamment de si le réseau visité (VN) est un réseau préféré, elle approuve (S43) la demande d'inscription (UL) dans le réseau domestique (HN), avec pour résultat une inscription de l'unité mobile (1) dans le réseau domestique (HN), suite à quoi une liste de réseaux préférés (RL) est envoyée à l'unité mobile (1) pour choisir un réseau préféré dans la liste (RL) comme réseau visité (VN) durant la prochaine tentative d'inscription dans le réseau domestique (HN).

13. Système selon la revendication 12, **caractérisé en ce que** l'unité de commande (2, 3) comprend une unité de détection (2) et une unité de préférence (3), dans lequel l'unité de détection (2) est apte à détecter la demande d'inscription (UL) et à informer l'unité de préférence (3) concernant la demande d'inscription détectée.

14. Système selon la revendication 13, **caractérisé en ce que** l'unité de détection (2) ou l'unité de préférence (3) est apte à déterminer si l'unité mobile (1) a envoyé une demande d'inscription précédente pour ledit réseau visité (VN) ou ladite région d'itinérance (VN , VN'), et l'unité de préférence (3) est apte à déterminer si le réseau visité est un réseau préféré et à informer l'unité de détection (2) concernant l'approbation (S13, S33) ou la désapprobation (S26) de la demande d'inscription détectée (UL).

15. Système selon la revendication 13 ou 14, **caractérisé en ce que** l'unité de détection (2) est apte à retenir la demande d'inscription détectée (UL) et à transférer la demande d'inscription détectée au réseau domestique (HN) ou à un HLR (4) du réseau domestique (HN) après l'approbation (S13, S33) ou la désapprobation (S26) correspondante provenant de l'unité de préférence (3).

16. Système selon l'une quelconque des revendications 12 à15, **caractérisé en ce que** le système est apte à exécuter un procédé selon l'une quelconque des revendications 2 à 11.
